(19) Europäisches Patentamt
European Patent Office
Office européen des brevets

(11) **EP 2 838 226 A1**

(12) **EUROPEAN PATENT APPLICATION**
published in accordance with Art. 153(4) EPC

(43) Date of publication:
**18.02.2015 Bulletin 2015/08**

(51) Int Cl.:
***H04L 12/24*** (2006.01)

(21) Application number: **12874576.7**

(22) Date of filing: **25.07.2012**

(86) International application number:
**PCT/CN2012/079135**

(87) International publication number:
**WO 2013/155807 (24.10.2013 Gazette 2013/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.04.2012 CN 201210109840**

(71) Applicant: **ZTE Corporation
Shenzhen, Guangdong 518057 (CN)**

(72) Inventor: **CUI, Wensheng
Shenzhen
Guangdong 518057 (CN)**

(74) Representative: **Mozzi, Matteo et al
Jacobacci & Partners S.p.A.
Via Senato, 8
20121 Milano (IT)**

(54) **METHOD AND APPARATUS FOR CORRELATION ANALYSIS OF LAYERED NETWORK ALARMS AND SERVICES**

(57) Provided are a method and apparatus for correlation analysis of layered network alarms and services. The method includes: constructing a service layer topology structure of an entire network, connected services in adjacent service layers are in a relationship between client layer service and server layer service from top to down; correlating an alarm reported by a network element to a service according to correlation rules; on the basis of the service layer topology structure of the entire network and alarms correlated to services, determining local layer alarm status and server layer alarm status of the services. The solution enables network management system to obtain local layer alarm status and server layer status according to the relationships of alarms reported by network elements and services on the network elements and further to estimate the number of services affected by alarms and the influence degree, thereby analyzing service fault status, accelerating the positioning of critical network failure and reducing operation and maintenance cost. The solution makes the positioning of critical network failure more efficient by suppressing derivative alarms, decreasing the number of alarms reported by network elements and filtering out more important alarms.

Constructing the service layer topology structure of the entire network, where connected services in adjacent service layers are in a relationship between a client layer service and a server layer service from top to down — S301

By suppressing derivative alarms, network elements only report root alarms — S302

Correlating an alarm reported by a network element to a service according to correlation rules — S303

On the basis of the service layer topology structure of the entire network and the alarm correlated to the service, determining a local layer alarm status and a server layer alarm status of the service — S304

On the basis of the service layer topology structure of the entire network and correlation between alarms reported by network elements and services, determining the number of services affected by each alarm and the influence degree of the alarm to services of the entire network — S305

**Fig. 3**

EP 2 838 226 A1

**Description**

TECHNICAL FIELD

The present invention relates to the technology of failure maintenance in the field of communication services, and particularly to a method and apparatus for correlation analysis of layered network alarms and services.

BACKGROUND

With the fast development of IP (Internet Protocol) networks, bearer networks need to bear more and more conventional telecommunication services and emerging services. The volume of network services increases rapidly, and the network scale is increasingly enlarged, as a result, the difficulty and workload of network operation and maintenance are also dramatically increasing.

An IP network bears multiple service layers, such as a physical layer, a data link layer, a network layer, a transmission layer, a session layer and an application layer. Hence, the IP network is a layered network, and is referred to as a layered network for short. An optical synchronization transmission network is also a layered network. At present, when layered network services are maintained, generally operation and maintenance personnel check alarm information reported by a device to a network management system to learn a network failure, and position a failure root which affects the services according to a network topology structure and service configurations. Such a maintenance method has various problems which are described as follows.

I. In order to management a service failure status, a user generally requires the device to report alarm information for each service. When failure occurs at a physical layer, a large amount of service alarms will be generated. For example, some operators ask the device not to suppress any alarm and the device must report all the alarms. In addition, the user also needs to configure a large number of OAM (Operation Administration and Maintenance) entities for the services to detect the failure, such that not only the configuration maintenance is complicated, but the number of OAM entities is also limited by the hardware capability, thereby resulting in high operation and maintenance costs.

II. The root failure in the bottom layer will cause a large number of upper layer service derivative alarms, such that it would be very difficult to search for critical and root alarms in large number of alarms. Hence, not only the operation and maintenance personnel are difficult to evaluate the influence degree of the failure on the services so as to solve the most critical network failure, but the network management system also needs to process a large amount of alarm information.

Common methods for alarm correlation analysis mainly focus in suppression relationship analysis of root alarms and derivative alarms, such as an expert system method and an alarm rule method, but do not relate to correlation relationship analysis of alarms and services, and particularly do not relate to the influence degree of the alarms on the services and the service failure status, which is disadvantageous for the operation and maintenance personnel to evaluate the influence degree of the failure on the services in time and to find the network failure which affects the services most.

SUMMARY

For this purpose, the embodiments of the present invention provide a method and apparatus for correlation analysis of layered network alarms and services so as to enable operation and maintenance personnel to learn a service failure status.

An embodiment of the present invention provides a method for correlation analysis of layered network alarms and services which includes:

constructing a service layer topology structure of an entire network, wherein connected services in adjacent service layers are in a relationship between a client layer service and a server layer service from top to down;
correlating an alarm reported by a network element to a service according to correlation rules; and
on the basis of the service layer topology structure of the entire network and the alarm correlated to the service, determining a local layer alarm status and a server layer alarm status of the service.

In the described embodiment, before correlating the alarm reported by the network element to the service according to the correlation rules, the method further includes:

suppressing derivative alarms so that alarms reported by the network element only include root alarms.

In the described embodiment, the correlation rules include:

dividing alarms into service-type alarms and device-type alarms, the device-type alarms being alarms resulted from a hardware failure of a network element, and the service-type alarms being alarms generated when a service processing unit of a network element has detected a failure when processing services; and

correlating the service-type alarms to services relevant to the alarms in the service layer where the services are located.

In the described embodiment, on the basis of the service layer topology structure of the entire network and the alarm correlated to the service, determining the local layer alarm status and the server layer alarm status of the service includes:

on the basis of any specific service, counting the number of alarms of each alarm level relevant to the service in the local service layer to obtain the local layer alarm status of the service; and

in the service layer topology structure of the entire network, the server layer alarm status of the client layer service being composed by a server layer alarm status and a local layer alarm status of the server layer service corresponding to the client layer service together.

In the described embodiment, the method further includes:

on the basis of the service layer topology structure of the entire network and correlation between alarms reported by network elements and services, determining the number of services affected by each alarm and influence degree of the alarm to services of the entire network.

In the described embodiment, on the basis of the service layer topology structure of the entire network and the correlation between alarms reported by network elements and services, determining the number of services affected by each alarm and the influence degree of the alarm to services of the entire network includes:

on the basis of the service layer topology structure of the entire network, the situation of the alarms correlated to the services and the situation of device-type alarms, recursively computing the number of services affected by the alarms; and

performing weighted computation according to server parameter information about each service to obtain the influence degree of the current alarm to services of the entire network.

Another embodiment of the present invention provides an apparatus for correlation analysis of layered network alarms and services, which includes:

a construction module configured to construct a service layer topology structure of an entire network, wherein connected services in adjacent service layers are in a relationship between a client layer service and a server layer service from top to down;

a correlating module configured to correlate an alarm reported by a network element to a service according to correlation rules; and

an alarm status determination module configured to, on the basis of the service layer topology structure of the entire network and the alarm correlated to the service, determine a local layer alarm status and a server layer alarm status of the service.

In the described embodiment, the apparatus further includes:

a derivative alarm suppression module configured to suppress derivative alarms, so that alarms reported by the network element only include root alarms.

In the described embodiment, the correlation rules include:

dividing the alarms into service-type alarms and device-type alarms, the device-type alarms being alarms resulted from a hardware failure of a network element, and the service-type alarms being alarms generated when a service processing unit of a network element has detected a failure when processing services; and

correlating the service-type alarms to services relevant to the alarms in the service layer where the services are located.

In the described embodiment, the alarm status determination module further includes:

a local layer alarm status counting module configured to, on the basis of any specific service, count the number of alarms of each alarm level relevant to the service in the local service layer to obtain the local layer alarm status of the service; and
a server layer alarm status counting module configured to compose the server layer alarm status of the client layer service by a server layer alarm status and a local layer alarm status of the server layer service corresponding to the client layer service together.

In the described embodiment, the apparatus further includes:

an alarm influence determination module configured to, on the basis of the service layer topology structure of the entire network and correlation between alarms reported by network elements and services, determine the number of services affected by each alarm and influence degree of the alarm to services of the entire network.

In the described embodiment, the alarm influence determination module further includes:

an alarm-affected service number counting module configured to, on the basis of the service layer topology structure of the entire network, the situation of the alarms correlated to the services and the situation of the device-type alarms, recursively compute the number of services affected by the alarms; and
an alarm-affected service degree computation module configured to perform weighted computation according to server parameter information about each service to obtain the influence degree of the current alarm to services of the entire network.

By use of the above-mentioned technical solution, the embodiments of the present invention at least have the following advantages:

the use of the method and apparatus for correlation analysis of layered network alarms and services of the embodiments of the present invention enables network management system to obtain local layer alarm status and server layer status according to the relationships of alarms reported by network elements and services on the network elements and further to estimate the number of services affected by alarms and the influence degree, thereby analyzing service fault status, accelerating the positioning of critical network failure and reducing operation and maintenance cost. The embodiments of the present invention make the positioning of critical network failure more efficient by suppressing derivative alarms, decreasing the number of alarms reported by network elements and filtering out more important alarms.

BRIEF DESCRIPTION OF THE DRAWINGS

Fig. 1 is a flowchart of a method for correlation analysis of layered network alarms and services of a first embodiment of the present invention;
Fig. 2 is a flowchart of a method for correlation analysis of layered network alarms and services of a second embodiment of the present invention;
Fig. 3 is a flowchart of a method for correlation analysis of layered network alarms and services of a third embodiment of the present invention;
Fig. 4 is a schematic structural diagram of an apparatus for correlation analysis of layered network alarms and services of a fourth embodiment of the present invention;
Fig. 5 is a schematic structural diagram of an apparatus for correlation analysis of layered network alarms and services of a fifth embodiment of the present invention;
Fig. 6 is a schematic structural diagram of an apparatus for correlation analysis of layered network alarms and services of a sixth embodiment of the present invention;
Fig. 7 is a schematic diagram of an execution process in an optical synchronization transmission network according to an application example of the present invention;
Fig. 8 is a schematic structural diagram of a service layer topology structure of an entire network constructed in an application example of the present invention; and
Fig. 9 is a schematic diagram of a local layer alarm status and a server layer alarm status of some services in an application example of the present invention.

DETAILED DESCRIPTION OF THE EMBODIMENTS

The basic idea of the embodiments of the present invention is: constructing the service layer topology structure of the entire network, where the relationships of connected services in adjacent service layers are client layer service and server layer service from top to down; correlating an alarm reported by a network element to a service according to correlation rules; on the basis of the service layer topology structure of the entire network and alarms correlated to services, determining local layer alarm status and server layer alarm status of the services.

In order to further explain the applied technical means and effects of the embodiments of the present invention in order to achieve a predetermined purpose, the present invention is further described in details as follows with reference to the preferred embodiments and drawings below.

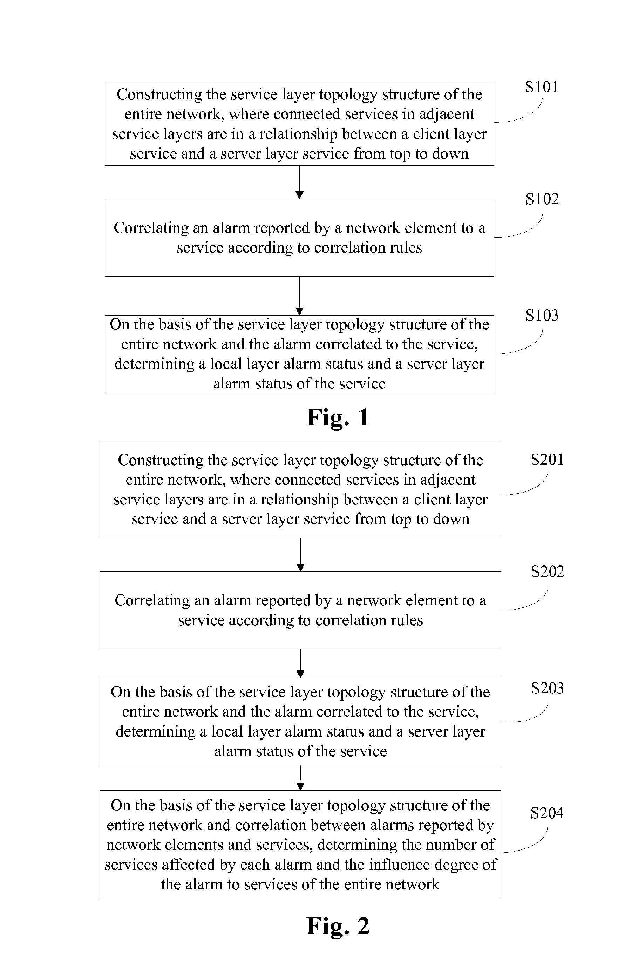

A first embodiment of the present invention is a method for correlation analysis of layered network alarms and services. As shown in Fig. 1, the method includes the following specific steps:

step S101, the service layer topology structure of the entire network is constructed, where connected services in adjacent service layers are in a relationship between a client layer service and a server layer service from top to down, i.e. the client layer service needs to be borne on the server layer service.

Step S102, alarms reported by network elements are correlated to services according to correlation rules.

Specifically, the correlation rules include:

dividing the alarms into service-type alarms and device-type alarms, the device-type alarms being alarms resulted from a hardware failure of a network element, and the service-type alarms being alarms generated where a service processing unit of the network elements has detected a failure when processing the services. The service processing unit of the network elements may be an existing software module or a chip for processing services in the network elements.

The service-type alarms are correlated to services relevant to the alarms in the service layer where the services are located. For example, a port-level alarm serves as the service-type alarm and is correlated to a physical layer service to serve as an alarm of the lowest layer service.

The device-type alarms are usually single board-level or network element-level hardware alarms and are not correlated to specific services.

Step S103, on the basis of the service layer topology structure of the entire network and the alarm correlated to the service, a local layer alarm status and a server layer alarm status of the services are determined.

Specifically, on the basis of any specific service, the number of alarms of each alarm level relevant to the service in the local service layer is counted to obtain a local layer alarm status of the service. It is common in the art that the alarms reported by the network elements carry alarm level information.

In the service layer topology structure of the entire network, the server layer alarm status of the client layer service is composed by a server layer alarm status and a local layer alarm status of the server layer service corresponding to the client layer service together.

It is to be noted that in the service layer topology structure of the entire network, the service of the most bottom layer does not have the server layer alarm status; and except for the service of the most bottom layer, in other service layers, the server layer alarm status of the client layer service is composed by a server layer alarm status and a local layer alarm status of the server layer service corresponding to the client layer service together.

A second embodiment of the present invention is a method for correlation analysis of layered network alarms and services. This embodiment is approximately the same as the first embodiment, but the difference lies in that this embodiment is further added with a step S204 where on the basis of the service layer topology structure of the entire network and the situation of the alarms correlated to the services, the number of services affected by each alarm and the influence degree of the alarm to services of the entire network are determined. As shown in Fig. 2, the method includes the following specific steps:

step S201, the service layer topology structure of the entire network is constructed, where connected services in adjacent service layers are in a relationship between a client layer service and a server layer service from top to down, i.e. the client layer service needs to be borne on the server layer service.

Step S202, alarms reported by network elements are correlated to services according to correlation rules.

Step S203, on the basis of the service layer topology structure of the entire network and the alarm correlated to the service, a local layer alarm status and a server layer alarm status of the services are determined.

Step S204, on the basis of the service layer topology structure of the entire network and correlation between alarms reported by network elements and services, the number of services affected by each alarm and the influence degree of the alarm to services of the entire network are determined. Step S204 specifically includes:

> A1, on the basis of the service layer topology structure of the entire network, the situation of the alarms correlated to the services and the situation of the device-type alarms, recursively computing the number of services affected by a certain alarm.

In step A1, besides that the number of services affected by the service-type alarms can be recursively computed, although the device-type alarms are not correlated to specific services, which services are affected thereby can also be determined. Here, different analysis rules may be customized, for example, a service passing-by physical unit rule, where the physical units refer to a device, a single board, etc., and a device-type alarm (such as a "single board dislocation alarm") is judged as affecting all the services passing by the device where the alarm is located. Therefore, the number of services affected by the device-type alarms can likewise be recursively computed.

A2, Weighted computation is performed according to server parameter information about each service to obtain the influence degree of the current alarm to services of the entire network. Specifically, the server parameter information about a service includes: a service rate, a service level, etc. Given that the server parameter information about the service includes: a first parameter, a second parameter, ..., a $n^{th}$ parameter, and the number of services affected by the alarm is m, then the influence degree of the alarm to services of the entire network can be computed according to the following weighted formula:

$$\text{Influence degree of a certain alarm to services of the entire network}$$

$$= \sum_{i=0}^{m} \text{first parameter of ith service} \times L1 + \sum_{i=0}^{m} \text{second parameter of ith service}$$

$$\times L2 + \cdots + \sum_{i=0}^{m} \text{nth parameter of ith service} \times Ln$$

where L1, L2, ..., Ln are weighted coefficients and L1 + L2 + ... + Ln = 1.

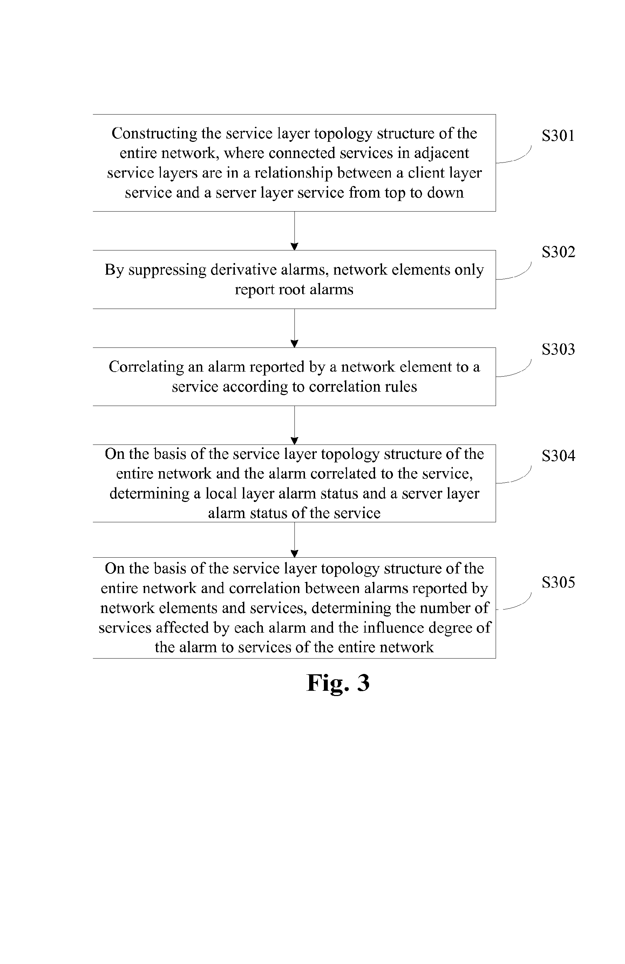

A third embodiment of the present invention is a method for correlation analysis of layered network alarms and services. This embodiment is approximately the same as the second embodiment, but the difference lies in that this embodiment is further added with a step S302 where derivative alarms are suppressed between step S301 and step S303. As shown in Fig. 3, the method includes the following specific steps:

> step S301, the service layer topology structure of the entire network is constructed, where connected services in adjacent service layers are in a relationship between a client layer service and a server layer service from top to down, i.e. the client layer service needs to be borne on the server layer service.
> Step S302, derivative alarms are suppressed, such that network elements only report root alarms.

Specifically, performing correlation analysis of alarms on the basis of the service layer topology structure of the entire network so as to suppress derivative alarms can be in accordance with the existing various methods for correlation analysis of alarms to suppress derivative alarms, such as a method for correlation analysis of alarms on the basis of rules: according to an alarm propagation mechanism, after a server layer generates an alarm, automatically suppressing alarms generated in the client layer services borne by the server layer and in services of various layers above the server layer. For example, in a service unlayered topology structure of an optical synchronization transmission network, when an LOS (Loss Of Signal) alarm is generated on a regenerator section layer, the regenerator section LOS alarm is only reported, while the service of a multiplex section layer borne by the regenerator section layer and the services of a high order path layer and a low order path layer above the regenerator section layer may not report alarms.

Step S303, alarms reported by network elements are correlated to services according to correlation rules.

Step S304, on the basis of the service layer topology structure of the entire network and the alarm correlated to the service, a local layer alarm status and a server layer alarm status of the services are determined.

Step S305, on the basis of the service layer topology structure of the entire network and correlation between alarms reported by network elements and services, the number of services affected by each alarm and the influence degree of the alarm to services of the entire network are determined. Step S305 specifically includes:

> A1, on the basis of the service layer topology structure of the entire network, the situation of the alarms correlated to the services and the situation of the device-type alarms, recursively computing the number of services affected by a certain alarm, and

A2, performing weighted computation according to server parameter information about each service to obtain the influence degree of the current alarm to services of the entire network.

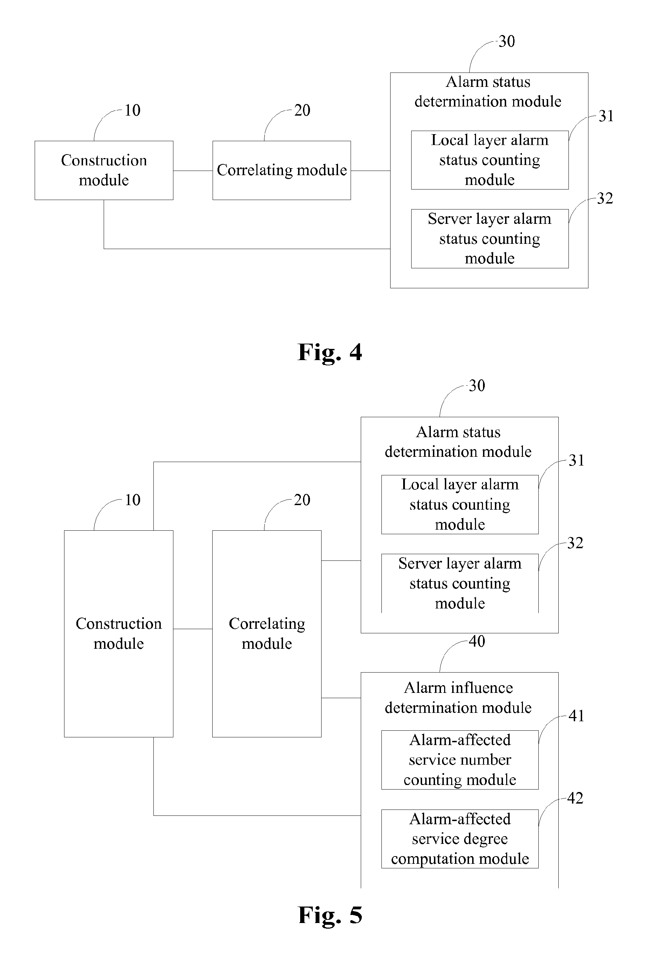

A fourth embodiment of the present invention is an apparatus for correlation analysis of layered network alarms and services. This embodiment corresponds to the method of the first embodiment. As shown in Fig. 4, the following components are included:

1) a construction module 10 is configured to construct the service layer topology structure of the entire network, where connected services in adjacent service layers are in a relationship between a client layer service and a server layer service from top to down, i.e. the client layer service needs to be borne on the server layer service.

2) A correlating module 20 is configured to correlate an alarm reported by a network element to a service according to correlation rules. Specifically, the correlation rules include:

dividing the alarms into service-type alarms and device-type alarms, the device-type alarms being alarms resulted from a hardware failure of a network element, and the service-type alarms being alarms generated where a service processing unit of the network elements has detected a failure when processing the services; and correlating the service-type alarms to services relevant to the alarms in the service layer where the services are located.

3) An alarm status determination module 30 is configured to, on the basis of the service layer topology structure of the entire network and the alarm correlated to the service, determine a local layer alarm status and a server layer alarm status of the service.

Specifically, the alarm status determination module 30 includes:

a local layer alarm status counting module 31 configured to, on the basis of any specific service, count the number of alarms of each alarm level relevant to the service in the local service layer to obtain a local layer alarm status of the service. It is common in the art that the alarms reported by the network elements carry alarm level information.

A server layer alarm status counting module 32 is configured to compose the server layer alarm status of the client layer service by a server layer alarm status and a local layer alarm status of the server layer service corresponding to the client layer service together.

A fifth embodiment of the present invention is an apparatus for correlation analysis of layered network alarms and services. This embodiment corresponds to the method of the second embodiment. As shown in Fig. 5, the following components are included:

1) a construction module 10 is configured to construct the service layer topology structure of the entire network, where connected services in adjacent service layers are in a relationship between a client layer service and a server layer service from top to down, i.e. the client layer service needs to be borne on the server layer service.

2) A correlating module 20 is configured to correlate an alarm reported by a network element to a service according to correlation rules. Specifically, the correlation rules include:

dividing the alarms into service-type alarms and device-type alarms, the device-type alarms being alarms resulted from a hardware failure of a network element, and the service-type alarms being alarms generated where a service processing unit of the network elements has detected a failure when processing the services; and correlating the service-type alarms to services relevant to the alarms in the service layer where the services are located.

3) An alarm status determination module 30 is configured to, on the basis of the service layer topology structure of the entire network and the alarm correlated to the service, determine a local layer alarm status and a server layer alarm status of the service.

Specifically, the alarm status determination module 30 includes:

a local layer alarm status counting module 31 configured to, on the basis of any specific service, count the number of alarms of each alarm level relevant to the service in the local service layer to obtain a local layer alarm status of the service. It is common in the art that the alarms reported by the network elements carry alarm level information.

A server layer alarm status counting module 32 is configured to compose the server layer alarm status of the client layer service by a server layer alarm status and a local layer alarm status of the server layer service corresponding to the client layer service together.

4) An alarm influence determination module 40 is configured to, on the basis of the service layer topology structure of the entire network and correlation between alarms reported by network elements and services, determine the number of services affected by each alarm and the influence degree of the alarm to services of the entire network. Specifically, the alarm status determination module 40 includes:

an alarm-affected service number counting module 41 configured to, on the basis of the service layer topology structure of the entire network, the situation of the alarms correlated to the services and the situation of the device-type alarms, recursively compute the number of services affected by a certain alarm.

Besides that the number of services affected by the service-type alarms can be recursively computed, although the device-type alarms are not correlated to specific services, the alarm-affected service number counting module 41 can also determine which services are affected thereby. Here, different analysis rules may be customized, for example, a service passing-by physical unit rule, where the physical units refer to a device, a single board, etc., and a device-type alarm (such as a "single board dislocation alarm") is judged as affecting all the services passing by the device where the alarm is located. Therefore, the number of services affected by the device-type alarms can likewise be recursively computed.

An alarm-affected service degree computation module 42 is configured to perform weighted computation according to server parameter information about each service to obtain the influence degree of the alarm to services of the entire network.

Specifically, the server parameter information about a service includes: a service rate, a service level, etc. Given that the server parameter information about the service includes: a first parameter, a second parameter, ..., a $n^{th}$ parameter, and the number of services affected by the alarm is m, then the influence degree of the alarm to services of the entire network can be computed according to the following weighted formula:

$$\text{Influence degree of a certain alarm to services of the entire network}$$

$$= \sum_{i=0}^{m} \text{first parameter of ith service} \times L1 + \sum_{i=0}^{m} \text{second parameter of ith service}$$

$$\times L2 + \cdots + \sum_{i=0}^{m} \text{nth parameter of ith service} \times Ln$$

where L1, L2, ..., Ln are weighted coefficients and L1 + L2 + ... + Ln = 1.

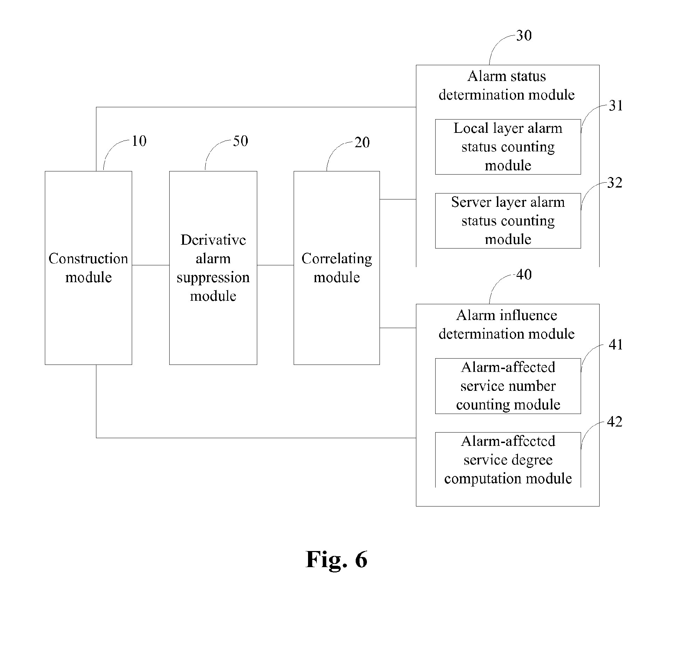

A sixth embodiment of the present invention is an apparatus for correlation analysis of layered network alarms and services. This embodiment corresponds to the method of the third embodiment. As shown in Fig. 6, the following components are included:

1) a construction module 10 is configured to construct the service layer topology structure of the entire network, where connected services in adjacent service layers are in a relationship between a client layer service and a server layer service from top to down, i.e. the client layer service needs to be borne on the server layer service.

2) A derivative alarm suppression module 50 is configured to suppress derivative alarms, such that network elements only report root alarms.

Specifically, performing correlation analysis of alarms on the basis of the service layer topology structure of the entire network so as to suppress derivative alarms can be in accordance with the existing various methods for correlation analysis of alarms to suppress derivative alarms, such as a method for correlation analysis of alarms on the basis of rules: according to an alarm propagation mechanism, after a server layer generates an alarm, automatically suppressing alarms generated in the client layer services borne by the server layer and in services of various layers above the server layer. For example, when an LOS alarm is generated on a regenerator section layer, the regenerator section LOS alarm is only reported, while the service of a multiplex section layer borne by the regenerator section layer and the services of a high order path layer and a low order path layer above the regenerator section layer may not report alarms.

3) A correlating module 20 is configured to correlate an alarm reported by a network element to a service according to correlation rules. Specifically, the correlation rules include:

dividing the alarms into service-type alarms and device-type alarms, the device-type alarms being alarms resulted from a hardware failure of a network element, and the service-type alarms being alarms generated where a service processing unit of the network elements has detected a failure when processing the services; and correlating the service-type alarms to services relevant to the alarms in the service layer where the services are located.

4) An alarm status determination module 30 is configured to, on the basis of the service layer topology structure of the entire network and the alarm correlated to the service, determine a local layer alarm status and a server layer alarm status of the service.

5) An alarm influence determination module 40 is configured to, on the basis of the service layer topology structure of the entire network and correlation between alarms reported by network elements and services, determine the number of services affected by each alarm and the influence degree of the alarm to services of the entire network. Specifically, the alarm status determination module 40 includes:

an alarm-affected service number counting module 41 configured to, on the basis of the service layer topology structure of the entire network, the situation of the alarms correlated to the services and the situation of the device-type alarms, recursively compute the number of services affected by a certain alarm.

An alarm-affected service degree computation module 42 is configured to perform weighted computation according to server parameter information about each service to obtain the influence degree of the alarm to services of the entire network.

In the following, an application example of the present invention in an optical synchronization transmission network is introduced on the basis of the third and sixth embodiments:

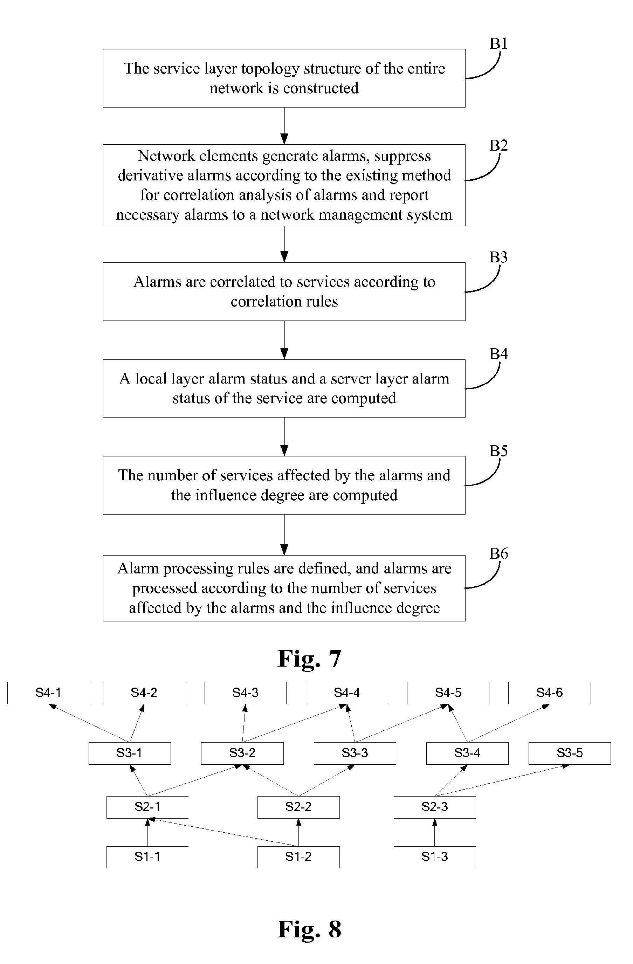

the optical synchronization transmission network is a network where several layers are divided from a vertical perspective: a physical layer, a regenerator section layer, a multiplex section layer, a high order path layer and a low order path layer, each layer having an independent transport entity --- service. As shown in Fig. 7, the execution process of this application example is as follows:

B1: the service layer topology structure of the entire network is constructed.

On the layered concept of a layered network, layered relationships of services of the entire network are established, and the relationships of topologically connected services in adjacent service layers are a client layer service and a server layer service. The constructed topology structure is as shown in Fig. 8, where each block represents a service. Service S2-1 serves as a client layer service to be borne on server layer services S1-1 and S1-2; service S4-1 serves as a client layer service to be borne on server layer service S3-1; and service S4-2 serves as a client layer service and also to be borne on server layer service S3-1.

B2: Network elements generate alarms, suppress derivative alarms according to the existing method for correlation analysis of alarms and report necessary alarms to a network management system.

Specifically, on the basis of the service layer topology structure of the entire network, performing correlation analysis of alarms suppresses a large number of derivative alarms and only reports network management root alarms.

For example, after the regenerator section layer generates an LOS (Loss Of Signal) alarm, only the LOS alarm is reported, and all the client layer services borne on the regenerator section layer and upper layer service alarms may not be reported.

B3: Alarms are correlated to services according to correlation rules.

The correlation rules include: performing classification processing on the alarms: device-type alarms and service-type alarms, for example, a single board dislocation alarm belongs to the device-type alarms, while the regenerator section LOS belongs to the service-type alarms. A service-type alarm is only correlated to a service relevant to the alarm in the local layer, i.e. an alarm generated because a certain service of a certain service layer has failed should be correlated to this service in the local service layer. For example: a regenerator section LOS alarm is only correlated to a regenerator section path. The device-type alarms do not relate to specific services, such as: a single board dislocation alarm.

B4: A local layer alarm status and a server layer alarm status of the service are computed. Operation and maintenance personnel may check, and particularly may pay attention to the status of a critical service.

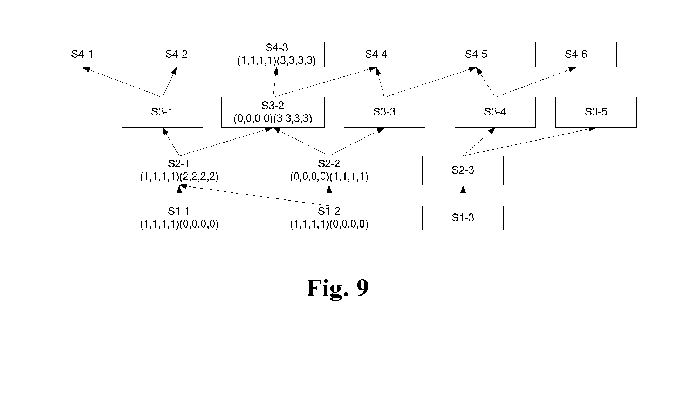

As shown in Fig. 9, the local layer alarm status of each service can be computed on the basis of step S3 -- the first group of data in each block in Fig. 9 is the counting of each alarm level of the local layer alarm related to the service. For example, the alarm counting of service S1-1 is (1, 1, 1, 1); the alarm counting of service S2-1 is (1, 1, 1, 1); and the alarm counting of service S3-2 is (0, 0, 0, 0). The existing alarms reported by network elements each time have already carried alarm levels, and thus the present invention only needs to perform statistic according to the alarm levels, respectively. The alarms of four levels of service S1-1 are respectively one, while none of the alarms of four levels of service S3-2 exists.

On the basis of the service layer topology structure of the entire network, the relationships of topologically connected services in adjacent service layers are a client layer service and a server layer service. The server layer alarm status of each service is recursively computed -- the second group of data in each block in Fig. 9 is the counting of each alarm level of the alarms related to the server layer service of the service. For example, server layer alarm status of service S2-1 = local layer alarm status of service S1-1 + server layer alarm status of service S1-1 + local layer alarm status of service S1-2 + server layer alarm status of service S1-2.

B5: The number of services affected by the alarms and the influence degree are computed.

As shown in Fig. 9, each service-type alarm may relate to one or more specific services. By that the relationships of topologically connected services in adjacent service layers in the layered network are a client layer service and a server layer service, the services affected by each service-type alarm can be recursively computed, and the total number is computed, and the number is then presented to a user as a key attribute of the alarm. Besides that the number of services affected by the service-type alarms can be recursively computed, although the device-type alarms are not related to specific services, which services are affected thereby can also be determined. Here, different analysis rules may be customized, for example, a service passing-by physical unit rule, where the physical units refer to a device, a single board, etc., and a device-type alarm (such as a "single board dislocation alarm") is judged as affecting all the services passing by the device where the alarm is located. Therefore, the number of services affected by the device-type alarms can likewise be recursively computed, and the number is presented to a user as a key attribute of the alarm.

Then, according to server parameter information about the services, such as a rate, a service level, by weighting each parameter, the value of the influence degree of the alarm to n services affected by the alarm, i.e. the influence degree of the alarm to services of the entire network, is comprehensively computed, and is presented to a user as a key attribute of the alarm.

If two computation values of the rate and the service level serve as key additional parameters of the alarm, then the influence degree computation formula can be:

$$\text{Influence degree of a certain alarm to services of the entire network}$$
$$= \sum_{i=0}^{m} \text{first parameter of ith service} \times L1 + \sum_{i=0}^{m} \text{second parameter of ith service} \times L2$$

where the weighted coefficients L1 and L2 can be flexibly provided with a proportional relationship as required, and L1 + L2 = 1.

B6: Alarm processing rules are defined, and alarms are processed according to the number of services affected by the alarms and the influence degree. According to different purposes, different alarm processing rules may be defined. For example:

1) an alarm forward passing rule
An alarm which affects the number of services greater than or equal to 10, and a user is reminded to process critical failures in time by means of a short message and an email.
2) An alarm level promotion rule
If the influence degree to services of the entire network is greater than or equal to 10, the critical level of the alarm is promoted.

The use of the method and apparatus for correlation analysis of layered network alarms and services of the present invention enables network management system to obtain local layer alarm status and server layer status according to the relationships of alarms reported by network elements and services on the network elements and further to estimate the number of services affected by alarms and the influence degree, thereby analyzing service fault status, accelerating the positioning of critical network failure and reducing operation and maintenance cost. The present invention makes the positioning of critical network failure more efficient by suppressing derivative alarms, decreasing the number of alarms reported by network elements and filtering out more important alarms.

By the detailed description of the embodiments, the applied technical means and effects of the present invention in order to achieve a predetermined purpose should be understood more deeply and specifically; however, the accompanying drawings are only for providing reference and description, and are not used to limit the present invention.

Industrial Applicability

According to the technical solution of the embodiments of the present invention, the service layer topology structure of the entire network is constructed, where the relationships of connected services in adjacent service layers are client layer service and server layer service from top to down; alarms reported by network elements are related to services according to correlation rules; and on the basis of the service layer topology structure of the entire network and alarms related to services, local layer alarm status and server layer alarm status of the services are determined. Thus, the operation and maintenance personnel are enabled to learn a failure status of the services in time.

**Claims**

1. A method for correlation analysis of layered network alarms and services, **characterized by** comprising:

   constructing a service layer topology structure of an entire network, wherein connected services in adjacent service layers are in a relationship between a client layer service and a server layer service from top to down;
   correlating an alarm reported by a network element to a service according to correlation rules; and
   on the basis of the service layer topology structure of the entire network and the alarm correlated to the service, determining a local layer alarm status and a server layer alarm status of the service.

2. The method for correlation analysis of layered network alarms and services according to claim 1, **characterized in that** before correlating the alarm reported by the network element to the service according to the correlation rules, the method further comprises:

   suppressing derivative alarms so that alarms reported by the network element only include root alarms.

3. The method for correlation analysis of layered network alarms and services according to claim 1, **characterized in that** the correlation rules comprise:

   dividing alarms into service-type alarms and device-type alarms, the device-type alarms being alarms resulted from a hardware failure of a network element, and the service-type alarms being alarms generated when a service processing unit of a network element has detected a failure when processing services; and
   correlating the service-type alarms to services relevant to the alarms in the service layer where the services are located.

4. The method for correlation analysis of layered network alarms and services according to claim 1, **characterized in that** on the basis of the service layer topology structure of the entire network and the alarm correlated to the service, determining the local layer alarm status and the server layer alarm status of the service comprises:

   on the basis of any specific service, counting the number of alarms of each alarm level relevant to the service in the local service layer to obtain the local layer alarm status of the service; and
   in the service layer topology structure of the entire network, the server layer alarm status of the client layer service being composed by a server layer alarm status and a local layer alarm status of the server layer service corresponding to the client layer service together.

5. The method for correlation analysis of layered network alarms and services according to any one of claims 1 to 4, **characterized in that** the method further comprises:

   on the basis of the service layer topology structure of the entire network and correlation between alarms reported by network elements and services, determining the number of services affected by each alarm and influence degree of the alarm to services of the entire network.

6. The method for correlation analysis of layered network alarms and services according to claim 5, **characterized in that** on the basis of the service layer topology structure of the entire network and the correlation between alarms reported by network elements and services, determining the number of services affected by each alarm and the influence degree of the alarm to services of the entire network comprises:

   on the basis of the service layer topology structure of the entire network, the situation of the alarms correlated to the services and the situation of device-type alarms, recursively computing the number of services affected by the alarms; and

performing weighted computation according to server parameter information about each service to obtain the influence degree of the current alarm to services of the entire network.

7. An apparatus for correlation analysis of layered network alarms and services, **characterized in that** the apparatus comprises:

a construction module configured to construct a service layer topology structure of an entire network, wherein connected services in adjacent service layers are in a relationship between a client layer service and a server layer service from top to down;

a correlating module configured to correlate an alarm reported by a network element to a service according to correlation rules; and

an alarm status determination module configured to, on the basis of the service layer topology structure of the entire network and the alarm correlated to the service, determine a local layer alarm status and a server layer alarm status of the service.

8. The apparatus for correlation analysis of layered network alarms and services according to claim 7, **characterized in that** the apparatus further comprises:

a derivative alarm suppression module configured to suppress derivative alarms, so that alarms reported by the network element only include root alarms.

9. The apparatus for correlation analysis of layered network alarms and services according to claim 7, **characterized in that** the correlation rules comprise:

dividing the alarms into service-type alarms and device-type alarms, the device-type alarms being alarms resulted from a hardware failure of a network element, and the service-type alarms being alarms generated when a service processing unit of a network element has detected a failure when processing services; and correlating the service-type alarms to services relevant to the alarms in the service layer where the services are located.

10. The apparatus for correlation analysis of layered network alarms and services according to claim 7, **characterized in that** the alarm status determination module further comprises:

a local layer alarm status counting module configured to, on the basis of any specific service, count the number of alarms of each alarm level relevant to the service in the local service layer to obtain the local layer alarm status of the service; and

a server layer alarm status counting module configured to compose the server layer alarm status of the client layer service by a server layer alarm status and a local layer alarm status of the server layer service corresponding to the client layer service together.

11. The apparatus for correlation analysis of layered network alarms and services according to any one of claims 7 to 10, **characterized in that** the apparatus further comprises:

an alarm influence determination module configured to, on the basis of the service layer topology structure of the entire network and correlation between alarms reported by network elements and services, determine the number of services affected by each alarm and influence degree of the alarm to services of the entire network.

12. The apparatus for correlation analysis of layered network alarms and services according to claim 11, **characterized in that** the alarm influence determination module further comprises:

an alarm-affected service number counting module configured to, on the basis of the service layer topology structure of the entire network, the situation of the alarms correlated to the services and the situation of the device-type alarms, recursively compute the number of services affected by the alarms; and

an alarm-affected service degree computation module configured to perform weighted computation according to server parameter information about each service to obtain the influence degree of the current alarm to services of the entire network.

Constructing the service layer topology structure of the entire network, where connected services in adjacent service layers are in a relationship between a client layer service and a server layer service from top to down — S101

Correlating an alarm reported by a network element to a service according to correlation rules — S102

On the basis of the service layer topology structure of the entire network and the alarm correlated to the service, determining a local layer alarm status and a server layer alarm status of the service — S103

**Fig. 1**

Constructing the service layer topology structure of the entire network, where connected services in adjacent service layers are in a relationship between a client layer service and a server layer service from top to down — S201

Correlating an alarm reported by a network element to a service according to correlation rules — S202

On the basis of the service layer topology structure of the entire network and the alarm correlated to the service, determining a local layer alarm status and a server layer alarm status of the service — S203

On the basis of the service layer topology structure of the entire network and correlation between alarms reported by network elements and services, determining the number of services affected by each alarm and the influence degree of the alarm to services of the entire network — S204

**Fig. 2**

Constructing the service layer topology structure of the entire network, where connected services in adjacent service layers are in a relationship between a client layer service and a server layer service from top to down — S301

By suppressing derivative alarms, network elements only report root alarms — S302

Correlating an alarm reported by a network element to a service according to correlation rules — S303

On the basis of the service layer topology structure of the entire network and the alarm correlated to the service, determining a local layer alarm status and a server layer alarm status of the service — S304

On the basis of the service layer topology structure of the entire network and correlation between alarms reported by network elements and services, determining the number of services affected by each alarm and the influence degree of the alarm to services of the entire network — S305

**Fig. 3**

30

Alarm status
determination module

31

Local layer alarm
status counting
module

32

Server layer alarm
status counting
module

10

Construction
module

20

Correlating module

## Fig. 4

30

Alarm status
determination module

31

Local layer alarm
status counting
module

32

Server layer alarm
status counting
module

10

Construction
module

20

Correlating
module

40

Alarm influence
determination module

41

Alarm-affected
service number
counting module

42

Alarm-affected
service degree
computation module

## Fig. 5

**Fig. 6**

B1

The service layer topology structure of the entire network is constructed

B2

Network elements generate alarms, suppress derivative alarms according to the existing method for correlation analysis of alarms and report necessary alarms to a network management system

B3

Alarms are correlated to services according to correlation rules

B4

A local layer alarm status and a server layer alarm status of the service are computed

B5

The number of services affected by the alarms and the influence degree are computed

B6

Alarm processing rules are defined, and alarms are processed according to the number of services affected by the alarms and the influence degree

## Fig. 7

| S4-1 | S4-2 | S4-3 | S4-4 | S4-5 | S4-6 |

| S3-1 | S3-2 | S3-3 | S3-4 | S3-5 |

| S2-1 | S2-2 | S2-3 |

| S1-1 | S1-2 | S1-3 |

## Fig. 8

| S4-1 | S4-2 | S4-3<br>(1,1,1,1)(3,3,3,3) | S4-4 | S4-5 | S4-6 |

| S3-1 | S3-2<br>(0,0,0,0)(3,3,3,3) | S3-3 | S3-4 | S3-5 |

| S2-1<br>(1,1,1,1)(2,2,2,2) | S2-2<br>(0,0,0,0)(1,1,1,1) | S2-3 |

| S1-1<br>(1,1,1,1)(0,0,0,0) | S1-2<br>(1,1,1,1)(0,0,0,0) | S1-3 |

**Fig. 9**

## INTERNATIONAL SEARCH REPORT

| International application No. |
| --- |
| **PCT/CN2012/079135** |

### A. CLASSIFICATION OF SUBJECT MATTER

H04L12/24 (2006.01) i

According to International Patent Classification (IPC) or to both national classification and IPC

### B. FIELDS SEARCHED

Minimum documentation searched (classification system followed by classification symbols)

IPC: H04L, H04W, H04Q

Documentation searched other than minimum documentation to the extent that such documents are included in the fields searched

Electronic data base consulted during the international search (name of data base and, where practicable, search terms used)

CNTXT, TWTXT, UXTXT, WOTXT, EPTXT: correspondence, influence, alarm, service, map+, associat+, relation+, layer, lever, degree

### C. DOCUMENTS CONSIDERED TO BE RELEVANT

| Category* | Citation of document, with indication, where appropriate, of the relevant passages | Relevant to claim No. |
| --- | --- | --- |
| X | CN 101335643 A (FIBERHOME TELECOMMUNICATION TECHNOLOGIES CO., LTD.), 31 December 2008 (31.12.2008), see description, page 4, line 5 to page 7, line 7, and page 7, line 22 to page 8, line 7 | 1-4, 7-10 |
| A | CN 101355451 A (ZTE CORP.), 28 January 2009 (28.01.2009), the whole document | 1-12 |
| A | CN 1713591 A (ZTE CORP.), 28 December 2005 (28.12.2005), the whole document | 1-12 |
| A | WO 2010075898 A1 (NOKIA SIEMENS NETWORKS OY et al.), 08 July 2010 (08.07.2010), the whole document | 1-12 |

☐ Further documents are listed in the continuation of Box C.     ☒ See patent family annex.

| | |
| --- | --- |
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 23 November 2012 (23.11.2012) | **13 December 2012 (13.12.2012)** |

| Name and mailing address of the ISA/CN: | Authorized officer |
| --- | --- |
| State Intellectual Property Office of the P. R. China No. 6, Xitucheng Road, Jimenqiao Haidian District, Beijing 100088, China Facsimile No.: (86-10) 62019451 | **LIAO, Jiajia** Telephone No.: (86-10) **62413555** |

Form PCT/ISA/210 (second sheet) (July 2009)

## INTERNATIONAL SEARCH REPORT
### Information on patent family members

International application No.

**PCT/CN2012/079135**

| Patent Documents referred in the Report | Publication Date | Patent Family | Publication Date |
|---|---|---|---|
| CN 101335643 A | 31.12.2008 | None | |
| CN 101355451 A | 28.01.2009 | None | |
| CN 1713591 A | 28.12.2005 | EP 1768283 A1 | 28.03.2007 |
| | | WO 2005125062 A1 | 29.12.2005 |
| | | KR 20070029255 A | 13.03.2007 |
| WO 2010075898 A1 | 08.07.2010 | None | |

Form PCT/ISA/210 (patent family annex) (July 2009)